# EUROPÄISCHE PATENTSCHRIFT

(11) **EP 4 028 276 B1**
(45) Veröffentlichungstag und Bekanntmachung des Hinweises auf die Patenterteilung: **06.09.2023**
(21) Anmeldenummer: 20740303.1
(22) Anmeldetag: 13.07.2020
(51) Int. Cl.: B60K 35/00, G02B 27/01

(54) **VERFAHREN ZUM BETREIBEN EINER VIRTUAL-REALITY-BRILLE IN EINEM FAHRZEUG SOWIE VIRTUAL-REALITY-SYSTEM MIT EINER VIRTUAL-REALITY-BRILLE UND EINEM FAHRZEUG**
METHOD FOR OPERATING VIRTUAL REALITY GLASSES IN A VEHICLE AND VIRTUAL REALITY SYSTEM WITH VIRTUAL REALITY GLASSES AND A VEHICLE
PROCÉDÉ DE FONCTIONNEMENT DE LUNETTES DE RÉALITÉ VIRTUELLE DANS UN VÉHICULE ET SYSTÈME DE RÉALITÉ VIRTUELLE AVEC DES LUNETTES DE RÉALITÉ VIRTUELLE ET UN VÉHICULE

(30) Priorität: 11.09.2019 DE 102019124386
(43) Veröffentlichungstag der Anmeldung: 20.07.2022
(73) Patentinhaber: Audi AG, 85045 Ingolstadt (DE)
(72) Erfinder: MOLL, Tobias, 85055 Ingolstadt (DE); BOUAZIZ, Tahar, 85055 Ingolstadt (DE)
(74) Vertreter: Hofstetter, Schurack & Partner
(86) Internationale Anmeldenummer: PCT/EP2020/069769
(87) Internationale Veröffentlichungsnummer: WO 2021/047805

(56) Entgegenhaltungen:
- DE-A1-102015 003 882
- DE-A1-102016 120 427
- US-A1- 2015 097 860

## Beschreibung

Die Erfindung betrifft ein Verfahren zum Betreiben einer Virtual-Reality-Brille in einem Fahrzeug, insbesondere in einem Kraftfahrzeug, sowie ein Virtual-Reality-System, das eine Virtual-Reality-Brille und ein Fahrzeug umfasst.

In einem Virtuelle-Realität-System, das heißt einem sogenannten Virtual-Reality (VR)-System, oder einem Vermischte-Realität-System, das heißt einem sogenannten Mixed-Reality (MR)-System, treten bei einem Träger einer entsprechenden Brille, das heißt einem Träger einer VR-Brille oder einer MR-Brille, häufig Symptome einer Reisekrankheit auf, wenn der Träger diese Brille in einer sich bewegenden Umgebung trägt. Der Grund hierfür ist, dass es zu einem Widerspruch der wahrgenommenen Sinnesreize, das heißt der makroskopischen Bewegung des Körpers des Trägers zum Beispiel in einem sich bewegenden Kraftfahrzeug, in dem der Träger der VR-Brille sitzt, und der mittels der Brille angezeigten von dem Träger visuell wahrgenommenen virtuellen Umgebung kommt. Denn während der Träger der VR-Brille in dem Kraftfahrzeug sitzt und sich mit der Bewegung des Kraftfahrzeugs mitbewegt, empfängt er aufgrund der Brille davon abweichende visuelle Reize. Vereinfacht beschrieben passen für den Träger der Brille die optisch gesehene Bewegung und die von seinem Körper gespürte Bewegung und Beschleunigung nicht zusammen. Dies führt häufig zu einem starken Unwohlsein, da der Träger an der sogenannten Reisekrankheit, die oftmals mit dem englischen Ausdruck Motion Sickness benannt und fachsprachlich als Kinetose bezeichnet wird, erkrankt.

Die US 2018 0089900 A1 zeigt ein VR-System für Kraftfahrzeuge zum Reduzieren eines Kinetoserisikos für einen Träger einer entsprechenden VR-Brille. Hierfür stellt das VR-System eine Anzeige bereit, bei der visuelle Hinweise mit der physikalisch erfahrenen Bewegung der Person übereinstimmen. Hierbei werden beispielsweise visuelle Hinweise angezeigt, die eine Flussbewegung an dem Träger vorbei anzeigen. Eine Geschwindigkeit dieses visuellen Hinweises wird an die Geschwindigkeit oder die Beschleunigung des Kraftfahrzeugs angepasst.

Die US 2017/0253252 A1 zeigt ein System, bei dem ein Fahrer in einem Kraftfahrzeug eine VR-Brille trägt. Auf der VR-Brille wird abhängig von der Bewegung des Kraftfahrzeugs eine visuelle Grafik angezeigt, die beispielsweise als ein Kraftvektor einer erwarteten Bewegung des in diesem Fall autonom fahrenden Kraftfahrzeugs ausgestaltet ist. Außerdem kann eine virtuelle Kugel in einem virtuellen Gefäß bewegt werden, um eine erwartete Bewegungsrichtung des Kraftfahrzeugs anzuzeigen.

In der US 2006/0015000 A1 wird ein System zum Reduzieren eines Kinetoseriskos für einen Insassen eines bewegten Kraftfahrzeugs beschrieben, in dessen Rahmen Videodaten einer Fahrzeugumgebung erfasst und für den Insassen des Kraftfahrzeugs angezeigt werden. Hierbei kann ein Ausschnitt oder ein vergrößerter Ausschnitt des Videobildes angezeigt werden, je nachdem, welcher Bildausschnitt für den Insassen anhand seiner Blickrichtung einem tatsächlichen Blickbereich des Insassen entspricht.

Die US 2015/097860 A1 offenbart ein Verfahren für eine dynamische virtuelle Realität im Fahrzeug umfassend Empfangen von Fahrzeugdaten und Empfangen von Benutzerdaten von einer Vorrichtung für virtuelle Realität. Das Verfahren umfasst Erzeugen einer virtuellen Ansicht auf der Grundlage der Fahrzeugdaten, der Benutzerdaten und eines virtuellen Weltmodells, wobei das virtuelle Weltmodell eine oder mehrere Komponenten enthält, die die virtuelle Ansicht definieren, wobei das Erzeugen der virtuellen Ansicht das Erweitern einer oder mehrerer Komponenten des virtuellen Weltmodells gemäß mindestens einem der Fahrzeugdaten und der Benutzerdaten und das Wiedergeben der virtuellen Ansicht an ein Ausgabegerät durch Steuern des Ausgabegeräts zum Aktualisieren der Anzeige der virtuellen Ansicht gemäß den Fahrzeugdynamikdaten umfasst.

Es ist die Aufgabe der Erfindung, eine Lösung bereitzustellen, mittels derer eine Virtual-Reality-Brille derart betrieben werden kann, dass für einen Träger der Virtual-Reality-Brille in einem sich bewegenden Fahrzeug ein Kinetoserisiko reduziert wird.

Diese Aufgabe wird durch die Gegenstände der unabhängigen Patentansprüche gelöst. Vorteilhafte Ausgestaltungen mit zweckmäßigen und nichttrivialen Weiterbildungen der Erfindung sind in den abhängigen Ansprüchen, der folgenden Beschreibung und den Figuren angegeben.

Der Erfindung liegt die Erkenntnis zugrunde, dass bei den bereits bekannten Verfahren zum Reduzieren des Kinetoserisikos für den Träger einer Virtual-Reality (VR)-Brille in einem fahrenden Fahrzeug jeweils spezielle Inhalte kreiert werden, die diesem dann angezeigt werden. So wird beispielsweise ein von einer aktuellen Bewegungsbahn des Fahrzeugs beeinflusster Inhalt für die VR-Brille produziert, wie beispielsweise die oben beschriebene sich in einem Gefäß bewegende Kugel. Es ist jedoch nicht immer erwünscht, dass nur zur Reduktion des Kinetoserisikos zusätzliche Inhalte für eine von der VR-Brille angezeigte virtuelle Umgebung kreiert werden, da ein derartiges Vorgehen aufwendig ist und zu gegebenenfalls nicht gewünschten virtuellen Inhalten in der angezeigten virtuellen Umgebung führt. Das erfindungsgemäße Verfahren basiert daher darauf, dass bereits bekannte Bildinhalte der virtuellen Umgebung lediglich bearbeitet werden, ohne dass neue Bildinhalte explizit erzeugt werden müssen, um zu einer Reduktion des Kinetoserisikos für den Träger der VR-Brille beizutragen.

Als erster Aspekt der Erfindung ist ein erfindungsgemäßes Verfahren zum Betreiben einer VR-Brille in einem Fahrzeug zum Reduzieren eines Kinetoserisikos für einen Träger der VR-Brille im Fahrzeug vorgesehen. Bei dem Fahrzeug handelt es sich bevorzugt um ein Kraftfahrzeug. Alternativ dazu kann als Fahrzeug zum Beispiel ein Flugzeug vorgesehen sein, indem die VR-Brille betrieben wird. Im Folgenden wird exemplarisch stets ein Kraftfahrzeug als Fahrzeug genannt, indem die VR-Brille betrieben wird. Mittels der VR-Brille wird generell eine von vorgegebenen Bilddaten beschriebene virtuelle Umgebung für den Träger der VR-Brille angezeigt. Unter VR wird die Darstellung und die gleichzeitige Wahrnehmung einer Wirklichkeit und ihrer physikalischen Eigenschaft in einer in Echtzeit computerregenerierten, interaktiven virtuellen Umgebung bezeichnet. Alternativ zu der hier beschriebenen VR-Brille kann das erfindungsgemäße Verfahren beispielsweise mit einer VR-Kontaktlinse durchgeführt werden. Im Folgenden wird jedoch stets eine VR-Brille als Anzeigevorrichtung zum Anzeigen der virtuellen Umgebung beschrieben.

Das erfindungsgemäße Verfahren umfasst folgende Schritte für eine Steuereinrichtung der VR-Brille: Zunächst erfolgt ein Empfangen von mittels einer Erfassungseinrichtung des Fahrzeugs erfassten und eine Fahrzeugbewegung des Fahrzeugs beschreibenden Bewegungsdaten. Hierfür kann beispielsweise auf ein Sensorsystem des Fahrzeugs zurückgegriffen werden, mithilfe dessen eine Geschwindigkeit, eine Beschleunigung, ein Radeinschlagwinkel und/oder ein Ausmaß von Erschütterungen des Fahrzeugs aufgrund von einer Fahrt auf einer holprigen Fahrbahn beziffert werden. Alternativ oder zusätzlich dazu kann auf prädiktive Streckendaten als Bewegungsdaten zugegriffen werden, die Informationen über eine vorausliegende Fahrstrecke umfassen und mithilfe derer folglich ebenfalls die genannten Bewegungsdaten ermittelt werden können. Derartige prädiktive Streckendaten können beispielsweise einem Navigationssystem des Fahrzeugs vorliegen. Es liegen also Daten vor, die die aktuelle Bewegung sowie gegebenenfalls die erwartete zukünftige Bewegung des Fahrzeugs beschreiben. In den einzelnen Erfassungseinrichtungen werden diese Daten erfasst und beispielsweise über eine entsprechende Kommunikationsverbindung zwischen einer Erfassungseinrichtung des Fahrzeugs an die Steuereinrichtung der VR-Brille übermittelt. Diese Kommunikationsverbindung kann drahtlos ausgebildet sein, und zwar zum Beispiel über ein drahtloses lokales Netzwerk (WLAN für Wireless Local Area Network), eine Bluetooth-Verbindung und/oder ein mobiles Datennetzwerk, beispielsweise basierend auf dem Mobilfunkstandard Long-Term-Evolution (LTE), Long-Term-Evolution-Advanced (LTE-A) oder Fifth Generation (5G).

In einem nächsten Verfahrensschritt erfolgt ein Aufteilen der die virtuelle Umgebung beschreibenden Bilddaten in einem Hintergrundbilddatensatz und einen Vordergrundbilddatensatz. Der Hintergrundbilddatensatz charakterisiert einen Hintergrund der virtuellen Umgebung. Der Vordergrundbilddatensatz charakterisiert zumindest ein in einem Vordergrund der virtuellen Umgebung positioniertes Objekt. Dieses Aufteilen der virtuellen Umgebung erfolgt unter Anwendung eines Bildverarbeitungskriteriums auf die die virtuelle Umgebung beschreibenden Bilddaten. In Form des Bildverarbeitungskriteriums sind hierbei zumindest ein Bildverarbeitungsalgorithmus hinterlegt, mithilfe dessen die beschriebene Aufteilung der Bilddaten in den Vordergrundbilddatensatz und den Hintergrundbilddatensatz möglich ist. Der Bildverarbeitungsalgorithmus kann beispielsweise auf einer Kantenerkennung, einer Kontrasterkennung und/oder auf Methoden der künstlichen Intelligenz basieren. Wird als virtuelle Umgebung beispielsweise eine flache Landschaft mit einem Gebirgszug im Hintergrund angezeigt, in deren Vordergrund sich ein einzelner Baum befindet, wird die flache Ebene mit dem Gebirgszug als Hintergrundbilddatensatz von dem Baum als im Vordergrund der virtuellen Umgebung positioniertes Objekt getrennt. Es liegen daraufhin folglich zwei Ebenen von Bilddaten vor, die voneinander getrennt wurden. Falls sich mehrere Objekte im Vordergrund der virtuellen Umgebung befinden, können diese auf einer gemeinsamen Vordergrundebene angeordnet sein. Es ist jedoch alternativ oder zusätzlich dazu möglich, dass mehrere Vordergrundebenen differenziert werden.

In einem nächsten Verfahrensschritt erfolgt ein Auswerten der erfassten Bewegungsdaten zum Bestimmen eines lateralen Versatzes zwischen einer Position des zumindest einen im Vordergrund der virtuellen Umgebung positionierten Objekts und dem Hintergrund. Es kann also gemäß dem lateralen Versatz festgelegt werden, dass der Vordergrund relativ zum Hintergrund um beispielsweise einen Millimeter in Blickrichtung der Augen des Trägers der VR-Brille nach links verschoben wird. Hierbei wird vorausgesetzt, dass der laterale Versatz derart gewählt wird, dass bei einem relativen Verschieben des zumindest einen Objekts im Vordergrund zum Hintergrund der virtuellen Umgebung bei dem Träger der VR-Brille das Kinetoserisiko reduziert wird, da ein Wahrscheinlichkeitswert für eine Wahrscheinlichkeit einer Kinetose für den Träger der VR-Brille aufgrund des beschriebenen relativen Verschiebens der beiden Bildebenen unter einem vorgegebenen Minimalwahrscheinlichkeitswert liegt. Eine Richtung des lateralen Versatzes entspricht dabei typischerweise einer Bewegungsrichtung des Fahrzeugs. Biegt beispielsweise das Fahrzeug relativ zu einer aktuellen Fahrtrichtung in einer Fahrzeuglängsrichtung nach rechts ab, wird ein entsprechender lateraler Versatz des im Vordergrund positionierten Baums zum Gebirgszug im Hintergrund bestimmt, bei dem der Baum in Blickrichtung der Augen des Trägers der VR-Brille von einer aktuellen Position nach links verschoben wird. Die beiden Bildebenen werden also passend zu den empfangenen Bewegungsdaten des Fahrzeugs zueinander verschoben. Alternativ zu der Bewegung des Baumes nach links kann der Gebirgszug von einer aktuellen Position nach rechts verschoben werden oder es werden sowohl der Baum nach links als auch der Gebirgszug nach rechts verschoben, also Baum und Gebirgszug gemäß dem lateralen Versatz voneinander wegbewegt.

In einem nächsten Schritt werden zur Umsetzung des bestimmten relativen Versatzes bearbeitete Bilddaten ermittelt, die eine bearbeitete virtuelle Umgebung beschreiben, in der das zumindest eine Objekt im Vordergrund relativ zu dem Hintergrund gemäß dem bestimmten lateralen Versatz verschoben ist. Es werden also neue Bilddaten zum Anzeigen auf der VR-Brille erzeugt, die die aufgrund des lateralen Versatzes gewünschte bearbeitete virtuelle Umgebung beschreiben. In einem letzten Schritt erfolgt daraufhin ein Anzeigen der von den bearbeiteten Bilddaten beschriebenen bearbeiteten virtuellen Umgebung mittels der VR-Brille.

Ein Vorteil des erfindungsgemäßen Verfahrens ist, dass bereits vorhandener VR-Inhalt, das heißt die bereits mithilfe der vorgegebenen Bilddaten beschriebene virtuelle Umgebung, verwendet wird, ohne dass ein extra zur Reduzierung des Kinetoserisikos des Trägers der VR-Brille produzierter virtueller Bildinhalt benötigt wird. Als virtuelle Umgebung kann zum Beispiel eine 360 Grad Darstellung einer virtuellen Landschaft, ein Video und/oder ein Comic angezeigt werden. Basierend auf den die Fahrzeugbewegung des Fahrzeugs beschreibenden Bewegungsdaten erfolgt eine entsprechende Relativbewegung der Hintergrundebene zur Vordergrundebene, wobei eine derartige Bewegung auch vom Träger der VR-Brille aufgrund der Fahrzeugbewegung physisch gespürt wird. Die visuelle Bewegung in der virtuellen Umgebung wird somit an die vom Träger erfahrene Bewegung des Fahrzeugs angepasst. Hierdurch wird ein Kinetoserisiko für den Träger der VR-Brille deutlich reduziert. Dieses Verfahren ist außerdem sowohl auf statische als auch auf bewegte virtuelle Umgebungsinhalte, die auf der VR-Brille angezeigt werden, anwendbar. Es ist also beispielsweise auch für einen dargestellten Comic oder einen Videoinhalt anwendbar, wobei ein jeweiliges Objekt im Vordergrund derartiger bewegter Videoinhalte zum Beispiel derart bewegt wird, dass dessen vom Videoinhalt vorgegebene Bewegung mit dem bestimmten lateralen Versatz verrechnet wird, indem beide beispielsweise addiert werden. Hierdurch wird das Kinetoserisiko für den Träger einer VR-Brille reduziert, und zwar besonders einfach und für den Träger komfortabel, da keine zusätzlichen Bildinhalte erzeugt und angezeigt werden.

Zu der Erfindung gehören auch Ausgestaltungsformen, durch die sich zusätzliche Vorteile ergeben.

In einer vorteilhaften Ausgestaltungsform ist es vorgesehen, dass der bestimmte laterale Versatz und ein von den Bewegungsdaten umfasster Lenkwinkel des Fahrzeugs nichtlinear miteinander korreliert sind. Bei einer besonders starken Fahrzeugbewegung des Fahrzeugs wird also der Vordergrund relativ zu dem Hintergrund nicht so stark verschoben, wie dies aufgrund der Bewegungsdaten des Fahrzeugs zu erwarten wäre. Vielmehr kann eine nur abgeschwächte Bewegung des Vordergrunds zum Hintergrund durchgeführt werden, wodurch letztendlich die von dem Träger der VR-Brille erfahrene Bewegung aufgrund der Fahrzeugbewegung nur in ihrer Richtung durch den lateralen Versatz der beiden Bildebenen zueinander angedeutet wird. Denn eine derartige abgeschwächte Bewegung in der virtuellen Umgebung im Vergleich zur tatsächlich vom Fahrzeug gefahrenen Bewegung kann ausreichen, um die Diskrepanz zwischen gesehener und gespürter Bewegung für den Träger der VR-Brille derart zu reduzieren, dass das Kinetoserisiko deutlich reduziert wird. Ein Vorteil hiervon ist, dass keine starke und gegebenenfalls als störend wahrgenommene Abweichung und Bewegung innerhalb der virtuellen Umgebung künstlich erzeugt wird, was gegebenenfalls vom Träger nicht gewünscht ist, da sie beispielsweise die virtuelle Umgebung stark beeinflusst. Durch die abgeschwächte Relativbewegung des Vordergrunds zum Hintergrund wird eine minimale Veränderung der angezeigten bearbeiteten virtuellen Umgebung verglichen mit der ursprünglichen virtuellen Umgebung erreicht bei gleichzeitiger deutlicher Reduktion des Kinetoserisikos für den Träger der VR-Brille. Hierdurch wird letztendlich die Auswirkung des Verfahrens auf die angezeigte bearbeitete virtuelle Umgebung so klein wie möglich gehalten, sodass der Träger der VR-Brille weiterhin komfortabel die von ihm gewünschte virtuelle Umgebung angezeigt bekommt, da die bearbeitete virtuelle Umgebung nur so geringfügig wie möglich von dieser ursprünglichen virtuellen Umgebung abweicht.

Gemäß einer weiteren Ausgestaltungsform ist es vorgesehen, dass das zumindest eine im Vordergrund der virtuellen Umgebung positionierte Objekt um einen vorgegebenen Vergrößerungsfaktor vergrößert wird. In der bearbeiteten virtuellen Umgebung wird das vergrößerte zumindest eine Objekt relativ zum Hintergrund verschoben. Es kann also beispielsweise vorgesehen sein, dass das im Vordergrund erkannte Objekt in Form des Baumes um einen Faktor von beispielsweise zehn Prozent vergrößert zum Hintergrund dargestellt wird und in der bearbeiteten virtuellen Umgebung als um zehn Prozent vergrößerter Baum um beispielsweise fünf Millimeter in Blickrichtung des Trägers nach links verschoben wird. Hierdurch ist es möglich, dass eine Bildlücke, die generell durch Verschieben des Objekts im Vordergrund relativ zum Hintergrund im Hintergrundbilddatensatz entsteht, verdeckt wird und folglich in der bearbeiteten virtuellen Umgebung nicht zu sehen ist. Denn durch die Vergrößerung des Objekts im Vordergrund entsteht trotz dieses lateralen Versatzes zwischen der ursprünglichen Position des Objekts im Vordergrund und der nun in der bereitgestellten bearbeiteten virtuellen Umgebung eingenommenen Position dieses Objekts keine für den Träger der VR-Brille sichtbare Lücke, da diese Lücke aufgrund der Vergrößerung des virtuellen Objekts in der bearbeiteten virtuellen Umgebung von dem Objekt selbst bereits verdeckt wird. Der Vergrößerungsfaktor kann hierbei zum Beispiel bei einem Prozent, zwei Prozent, drei Prozent, vier Prozent, fünf Prozent, zehn Prozent, 15 Prozent, 20 Prozent, 25 Prozent oder 30 Prozent liegen.

Hierdurch wird auf besonders einfache Art und Weise erreicht, dass ohne Bearbeitung des Hintergrundbilddatensatzes und lediglich durch eine simple Vergrößerung des virtuellen Objekts im virtuellen Vordergrund ein komfortables Anzeigen der bearbeiteten virtuellen Umgebung mithilfe der VR-Brille möglich wird. Der Träger der VR-Brille bekommt dadurch keine gegebenenfalls durch das Verschieben des Objekts im Vordergrund relativ zum Hintergrund bewirkten, in der virtuellen Umgebung gegebenenfalls als störend wahrgenommenen Auswirkungen des Verfahrens zu sehen. Je nach Größe des lateralen Versatzes kann hierbei eine entsprechende Vergrößerung des zumindest einen Objekts im Vordergrund gewählt werden. Die beiden Größen des lateralen Versatzes sowie der vorgegebene Vergrößerungsfaktor können somit miteinander korreliert sein.

Gemäß einer zusätzlichen Ausgestaltungsform ist es vorgesehen, dass, falls eine Bildlücke in der bearbeiteten virtuellen Umgebung aufgrund des Verschiebens des zumindest einen Objekts im Vordergrund gemäß dem bestimmten lateralen Versatz entsteht, die Bildlücke in der bearbeiteten virtuellen Umgebung unter Anwendung eines Bildlückenauffüllkriteriums auf die bearbeiteten Bilddaten mit einem virtuellen Bildfüllinhalt geschlossen wird. Das Bildlückenauffüllkriterium enthält somit Informationen beispielsweise zu einer Farbgebung in der Umgebung um das Objekt im Vordergrund herum, sodass beispielsweise mithilfe eines inhaltbasierten Bildauffüllung, zum Beispiel mithilfe eines sogenannten Content-Aware Fill-Algorithmus, der im Bildlückenauffüllkriterium hinterlegt ist, die virtuelle Bildlücke mit dem entsprechenden virtuellen Bildfüllinhalt aufgefüllt werden kann. Es wird also ein künstlich erzeugter Inhalt verwendet, um die entstandene Bildlücke zu schließen, sodass bei der Verschiebung des zumindest einen Objekts im Vordergrund relativ zum Hintergrund auch ohne Vergrößerung des zumindest einen Objekts im Vordergrund keine erkennbare Leerstelle im Hintergrund entsteht. Durch das Bildlückenauffüllkriterium kann somit basierend auf Farbwerten des Hintergrundbildes ein geeigneter Bildfüllinhalt bestimmt werden. Hierdurch wird mithilfe von minimalem Einsatz von künstlich erzeugten Bildinhalten ein für den Träger der VR-Brille störungsfreies und komfortables Erlebnis der bearbeiteten virtuellen Umgebung mittels der VR-Brille ermöglicht.

In einer zusätzlichen Ausgestaltungsform ist es vorgesehen, dass die erfassten Bewegungsdaten zum Bestimmen eines Rotationswinkels des zumindest einen im Vordergrund der virtuellen Umgebung positionierten Objekts relativ zum Hintergrund ausgewertet werden. Daraufhin werden bearbeitete Bilddaten ermittelt, die die bearbeitete virtuelle Umgebung beschreiben, in der das zumindest eine Objekt im Vordergrund relativ zum Hintergrund gemäß dem bestimmten lateralen Versatz verschoben und zusätzlich gemäß den bestimmten Rotationswinkeln rotiert ist. Bei dem relativen Rotieren des zumindest einen Objekts im Vordergrund zum Hintergrund der virtuellen Umgebung wird für den Träger der VR-Brille der Wahrscheinlichkeitswert für die Wahrscheinlichkeit einer Kinetose unter den vorgegebenen Minimalwahrscheinlichkeitswert gesenkt, sodass hierdurch ebenfalls das Kinetoserisiko für den Träger der VR-Brille reduziert wird. Der Rotationswinkel, der bestimmt wird, spiegelt ebenfalls die vom Fahrzeug durchgeführte Bewegung, die anhand der Bewegungsdaten vorliegt. Es kann also beispielsweise zusätzlich zu einer rein lateralen Verschiebung eine leichte Drehbewegung von dem virtuellen Objekt im virtuellen Vordergrund durchgeführt werden, um die beispielsweise bei einer Kurvenfahrt des Fahrzeugs von dem Träger der VR-Brille erfahrene Bewegung aufgrund der Fahrbewegung des Fahrzeugs realitätsnah mittels der bearbeiteten virtuellen Umgebung für den Träger visuell anzuzeigen. Bei einer Rechtskurvenfahrt (bezogen auf die Fahrtrichtung in Fahrzeuglängsrichtung) kann also beispielsweise zusätzlich zur rein lateralen Verschiebung in Blickrichtung nach links die vom Körper des Trägers erfahrene leichte Drehbewegung entgegen des Urzeigersinns nachgeahmt werden, indem das zumindest eine Objekt im Vordergrund um beispielsweise fünf Grad entgegen des Uhrzeigersinns gedreht wird (eine Drehachse verläuft hierbei in Blickrichtung des Trägers durch einen Mittelpunkt des zumindest einen virtuellen Objekts). Hierdurch wird der Komfort für den Träger der VR-Brille zusätzlich erhöht, da sich eine derartige Bewegung der beiden Bildebenen relativ zueinander besonders vorteilhaft für die Reduktion des Kinetoserisikos während des Tragens der VR-Brille beim Fahren mit dem Fahrzeug auswirkt.

Als laterale Verschiebung kann im Sinne der Erfindung generell nicht nur eine Bewegung entlang einer Querachse des Fahrzeugs verstanden werden, also nach links oder rechts zu einer Fahrtrichtung in Fahrzeuglängsrichtung, sondern auch eine Bewegung senkrecht dazu nach oben oder unten, das heißt entlang einer Fahrzeughochrichtung des Fahrzeugs. Fährt das Fahrzeug beispielsweise auf einer holprigen Straße mit zahlreichen Schlaglöchern, wodurch der Träger der VR-Brille eine Bewegung nach oben oder unten in Fahrzeughochrichtung erfährt, kann diese Bewegung ebenfalls mithilfe einer entsprechenden lateralen Verschiebung des im Vordergrund positionierten Objekts relativ zum Hintergrund widergespiegelt werden.

Als zweiter Aspekt der Erfindung ist ebenfalls ein erfindungsgemäßes Verfahren zum Betreiben einer VR-Brille in einem Fahrzeug zum Reduzieren eines Kinetoserisikos für einen Träger der VR-Brille im Fahrzeug vorgesehen. Dieses Verfahren umfasst folgende Schritte für die Steuereinrichtung der VR-Brille: Zunächst werden mittels einer Erfassungseinrichtung des Fahrzeugs erfasste und eine Fahrzeugbewegung des Fahrzeugs beschreibende Umgebungsdaten empfangen, wie dies bereits beim ersten Aspekt der Erfindung erläutert wurde. In einem nächsten Schritt erfolgt jedoch ein Vergrößern der virtuellen Umgebung um einen vorgegebenen Vergrößerungsfaktor, sodass ein Randbereich der virtuellen Umgebung außerhalb eines auf der VR-Brille angezeigten Anzeigebereichs liegt. Der Anzeigebereich umfasst zumindest einen Teilbereich eines Sichtbereichs eines Trägers der VR-Brille. Es kann also beispielsweise eine Vergrößerung der virtuellen Umgebung um zehn Prozent durchgeführt werden, sodass sich ein Rand der virtuellen Umgebung ergibt, der nicht mehr von der VR-Brille angezeigt wird, da er über deren Anzeigebereich hinausreicht. Die Vergrößerung kann hierbei beispielsweise abhängig von einer Bildqualität und einer Auflösung der VR-Brille gewählt sein. Der Vergrößerungsfaktor kann hierbei zum Beispiel bei einem Prozent, zwei Prozent, drei Prozent, vier Prozent, fünf Prozent, zehn Prozent, 15 Prozent, 20 Prozent, 25 Prozent oder 30 Prozent liegen.

Der angezeigte Anzeigebereich umfasst bevorzugt einen vorgegebenen Teilbereich des Sichtbereichs des Trägers der VR-Brille. Dies ist beispielsweise häufig bei einem Video oder Comic als virtuelle Umgebung der Fall, die beziehungsweise der zum Beispiel auf einer virtuelle Leinwand im Sichtbereich des Trägers der VR-Brille angezeigt wird. Ist dies der Fall wird bei gleich groß bleibender virtueller Leinwand die auf der virtuellen Leinwand angezeigte virtuelle Umgebung vergrößert, sodass sich ein nicht auf der VR-Brille angezeigter Randbereich um die virtuelle Leinwand herum bildet. Der Anzeigebereich ist in diesem Beispiel die virtuelle Leinwand. Generell ist der Anzeigebereich im Sinne der Erfindung der auf der VR-Brille für den Träger der VR-Brille angezeigte Bereich, in dem die virtuelle Umgebung angezeigt wird. Der Anzeigebereich erstreckt sich bevorzugt nicht über den gesamten Sichtbereich des Trägers der VR-Brille. Der Anzeigebereich umfasst also bevorzugt nur einen Teilbereich des Sichtbereichs des Trägers der VR-Brille.

In einem nächsten Schritt erfolgt ein Auswerten der erfassten Bewegungsdaten zum Bestimmen einer Bewegungstrajektorie für zumindest einen im angezeigten Anzeigebereich liegenden Bereich der vergrößerten virtuellen Umgebung. Letztendlich wird hierdurch also eine Trajektorie für einen beliebigen Bildpunkt der vergrößerten virtuellen Umgebung bestimmt, die von einer aktuellen Position dieses Bildpunkts auf dem Anzeigebereich zu einer Zielposition auf dem Anzeigebereich führt. Beim Bewegen der vergrößerten virtuellen Umgebung gemäß der bestimmten Bewegungstrajektorie wird für den Träger der VR-Brille das Kinetoserisiko derart reduziert, dass ein Wahrscheinlichkeitswert für eine Wahrscheinlichkeit einer Kinetose unter einem vorgegebenen Minimalwahrscheinlichkeitswert liegt. Befindet sich also beispielsweise in der vergrößerten virtuellen Umgebung ein zentrales Objekt, kann dieses durch die Bewegungstrajektorie von einer aktuellen Position eines Mittelpunkts des Objekts in der vergrößerten virtuellen Umgebung zu einer beispielsweise fünf Millimeter in Blickrichtung des Trägers links von diesem virtuellen Objekt befindlichen Position bewegt werden, wobei hierbei die gesamte vergrößerte virtuelle Umgebung gemäß der beschriebenen Bewegungstrajektorie bewegt wird (also nicht nur das exemplarisch genannte Objekt). Dies führt dazu, dass im Rahmen des Verfahrens ein Ermitteln von bearbeiteten Bilddaten stattfindet, wobei die bearbeiteten Bilddaten eine bearbeitete virtuelle Umgebung beschreiben, in der die vergrößerte virtuelle Umgebung gemäß der Bewegungstrajektorie bewegt wird. Anschließend erfolgt das Anzeigen der von den bearbeiteten Bilddaten beschriebenen bearbeiteten virtuellen Umgebung auf der VR-Brille.

Dadurch, dass die virtuelle Umgebung zunächst vergrößert wurde, kann trotz der Bewegung des Bildes gemäß der Bewegungstrajektorie erreicht werden, dass der gesamte Anzeigebereich mit der virtuellen Umgebung gefüllt ist, da stets ein Bereich der vergrößerten virtuellen Umgebung aus dem bisher verdeckten Randbereich nachrückt, wenn beispielsweise die bearbeitete virtuelle Umgebung in eine bestimmte Richtung gemäß der Bewegungstrajektorie verschoben wird. Es kann also letztendlich der komplette Inhalt des Anzeigebereichs der VR-Brille entsprechend den Bewegungsdaten des Fahrzeugs verschoben werden. Hierfür wird die virtuelle Umgebung zunächst vergrößert und der Randbereich der vergrößerten virtuellen Umgebung durch die Begrenzung des Anzeigebereich der VR-Brille auf den Teilbereich des Sichtbereichs des Trägers der VR-Brille vorgegeben. Durch die überstehenden Randbereiche außerhalb dieses innenliegenden Anzeigebereichs stehen in allen Richtungen um den Anzeigebereich herum Bildinhalte der virtuellen Ebene zur Verfügung, die jeweils bei Verschiebung des Bildinhaltes im sichtbaren Bereich in den sichtbaren Anzeigebereich nachrücken können. Hierdurch wird der Eindruck eines feststehenden Sichtfensters bei verschobenem Gesamtinhalt bewirkt. Bei feststehendem Anzeigebereich wird also mithilfe des Vergrößerns der virtuellen Umgebung letztendlich erreicht, dass die gesamte virtuelle Umgebung gemäß der Bewegungstrajektorie bewegt werden kann, ohne dass es zu einer Bildlücke der angezeigten virtuellen Umgebung im Randbereich des Anzeigebereichs kommt. Der hierbei vom Träger der VR-Brille wahrgenommene Eindruck entspricht letztendlich einer Art Kameraschwenkung oder Kamerabewegung.

Der Vorteil von diesem Verfahren ist, dass das meiste heute vorliegende Bildmaterial als zweidimensionales Bildmaterial vorgegeben ist, das generell nicht den in einer VR-Brille zur Verfügung stehenden 360-Grad-Blickwinkel ausfüllt. Dies wird sogar voraussichtlich weiterhin der Fall sein, da eine permanente Kopfdrehung von vollen 360-Grad-Winkeln vom Träger der VR-Brille in der Regel nicht gewünscht ist. Bei diesem Vorschlag der Bewegungsangleichung mithilfe der bestimmten Bewegungstrajektorie wird nun kein komplexer Algorithmus zur Ebenenextraktion oder Ebenenerstellung und gegebenenfalls Bildauffüllung benötigt. Ein simples Vergrößern und Verschieben des Inhalts der virtuellen Umgebung reicht nämlich aus, um eine vom Träger gespürte Bewegung visuell zu unterstützen.

Aktuell bestehen zudem aufgrund von Hardwareeinschränkungen einer VR-Brille noch weitere Vorteile, denn es liegt in der Regel hochauflösendes Bildmaterial vor, während die VR-Brille selbst eine niedrigere Auflösung aufweist. Aufgrund des in der Regel vielfach höher aufgelösten Bildinhalts der virtuellen Umgebung bedeutet eine digitale Vergrößerung in der VR-Brille für den Träger der VR-Brille keinen Bildqualitätsverlust, wobei gleichzeitig das Kinetoserisiko deutlich reduziert werden kann. Hierdurch wird also eine für den Träger der VR-Brille besonders komfortable Reduzierung des Kinetoserisikos erreicht.

Zu diesem zweiten Aspekt der Erfindung gehören auch Ausgestaltungsformen, durch die sich zusätzliche Vorteile ergeben.

In einer vorteilhaften Ausgestaltungsform des Verfahrens wird ein gemäß der bestimmten Bewegungstrajektorie vom im angezeigten Anzeigebereich liegenden Bereich der vergrößerten virtuellen Umgebung zurückgelegter Abstand und ein von den Bewegungsdaten umfasster Lenkwinkel des Fahrzeugs nichtlinear miteinander korreliert. Der Abstand zwischen der aktuellen Position eines bestimmten Bildpunktes und dessen Zielposition aufgrund der vorgegebenen Bewegungstrajektorie kann also zum Beispiel kürzer sein als es der erfasste Lenkwinkel des Fahrzeugs erwarten lassen würde. Analog zu der oben im Zusammenhang mit dem ersten Aspekt der Erfindung beschriebenen nichtlinearen Korrelation zwischen dem bestimmten lateralen Versatz und dem Lenkwinkel des Fahrzeugs kann also die Bewegungstrajektorie an sich eine kürzere Strecke umfassen als dies aufgrund der Bewegung des Fahrzeugs angenommen werden würde, da eine stärkere Bewegung des Fahrzeugs relativ zu einer ersten Bewegung des Fahrzeugs nicht zu einer größeren Positionsänderung der virtuellen Umgebung verglichen mit der Positionsänderung bei der ersten Bewegung kommen muss. Hierdurch wird erreicht, dass zwar das Kinetoserisiko reduziert wird, es aber zu keiner auffallend starken Beeinträchtigung der virtuellen Umgebung an sich durch das beschriebene Verfahren kommt.

In einer zusätzlichen Ausgestaltungsform ist vorgesehen, dass beim Anzeigen der von den bearbeiteten Bilddaten beschriebenen bearbeiteten virtuellen Umgebung auf der VR-Brille die bearbeitete virtuelle Umgebung stets den ganzen Anzeigebereich ausfüllt. Es ist also explizit nicht vorgesehen, dass aufgrund der Bewegung entlang der Bewegungstrajektorie die virtuelle Umgebung derart verschoben wird, dass letztendlich trotz des gegebenen Randbereichs eine Lücke in der angezeigten virtuellen Umgebung entsteht. Aus diesem Grund ist es vorgesehen, dass stets der gesamte Anzeigebereich der virtuellen Umgebung auf der VR-Brille von zumindest einem Teilbereich der vergrößerten virtuellen Umgebung ausgefüllt ist. Hierdurch werden Irritationen des Trägers der VR-Brille aufgrund von plötzlich entstehenden Lücken im Randbereich des Anzeigebereichs der virtuellen Umgebung verhindert, was ein sinnvolles Verwenden der VR-Brille im fahrenden Fahrzeug ermöglicht.

Eine besonders vorteilhafte Ausgestaltungsform des Verfahrens sieht vor, dass die VR-Brille eine Erfassungseinheit umfasst und die Steuereinrichtung mittels der Erfassungseinheit erfasste, eine Bewegung der VR-Brille beschreibende Brillenbewegungsdaten als Bewegungsdaten berücksichtigt. Zusätzlich zu den oben beschriebenen Bewegungsdaten, die die erfasste Fahrzeugbewegung des Fahrzeugs beschreiben, können von der VR-Brille selbst bereitgestellte Daten berücksichtigt werden, um letztendlich den lateralen Versatz und/oder die Bewegungstrajektorie zu bestimmen. Hierbei kann zum Beispiel eine Kopfbewegungen des Trägers der VR-Brille erfasst werden, die beispielsweise eine Bewegung für den Träger in eine Bewegungsrichtung des Fahrzeugs verstärken oder dieser entgegenwirken können. Als Brillenbewegungsdaten werden zum Beispiel eine Bewegung, eine Geschwindigkeit der Bewegung, eine Drehbewegung und/oder eine Beschleunigung der Bewegung der Brille erfasst und bereitgestellt. Hierfür umfasst die VR-Brille eine entsprechende Brillensensoreinrichtung als Erfassungseinheit. Hierdurch ist letztendlich eine besonders zuverlässige Reduktion des Kinetoserisikos für den Träger der VR-Brille erreichbar, da nicht nur die externen Einwirkungen auf seinen Körper berücksichtigt werden können, sondern zusätzlich dazu die tatsächliche Bewegung der VR-Brille anhand der Brillenbewegungsdaten mitberücksichtigt wird.

Das erfindungsgemäße Virtual-Reality-System umfasst eine VR-Brille und ein Fahrzeug. Das VR-System ist dazu ausgebildet, ein Verfahren, wie es oben beschrieben wurde, basierend auf der Auswertung des bestimmten lateralen Versatzes, und/oder ein Verfahren, wie es oben beschrieben wurde, das auf dem Bestimmen einer Bewegungstrajektorie beruht, durchzuführen. Die beiden beschriebenen Verfahren können somit letztendlich kombiniert werden. Die im Zusammenhang mit den beiden erfindungsgemäßen Verfahren vorgestellten bevorzugten Ausgestaltungsformen und deren Vorteile gelten entsprechend, soweit anwendbar, für das erfindungsgemäße VR-System. Aus diesem Grund sind die entsprechenden Weiterbildungen des erfindungsgemäßen Virtual-Reality-Systems hier nicht noch einmal beschrieben.

Das Fahrzeug ist bevorzugt als Kraftwagen, insbesondere als Personenkraftwagen oder Lastkraftwagen, oder als Personenbus oder Motorrad ausgestaltet.

Alternativ zu der beschriebenen VR-Brille kann eine entsprechende Mixed-Reality (MR)-Brille verwendet werden.

Zu der Erfindung gehört auch die Steuereinrichtung der VR-Brille. Die Steuereinrichtung weist eine Prozessoreinrichtung auf, die dazu eingerichtet ist, eine Ausführungsform des erfindungsgemäßen Verfahrens durchzuführen. Die Prozessoreinrichtung kann hierzu zumindest einen Mikroprozessor und/oder zumindest einen Mikrocontroller und/oder zumindest einen FPGA (Field Programmable Gate Array) und/oder zumindest einen DSP (Digital Signal Processor) aufweisen. Des Weiteren kann die Prozessoreinrichtung Programmcode aufweisen, der dazu eingerichtet ist, bei Ausführen durch die Prozessoreinrichtung die Ausführungsform des erfindungsgemäßen Verfahrens durchzuführen. Der Programmcode kann in einem Datenspeicher der Prozessoreinrichtung gespeichert sein.

Die Erfindung umfasst auch die Kombinationen der Merkmale der beschriebenen Ausgestaltungsformen.

Im Folgenden sind Ausführungsbeispiele der Erfindung beschrieben. Hierzu zeigt:
- Fig. 1: eine schematische Darstellung eines Virtual-Reality-Systems für ein Fahrzeug,
- Fig. 2: in einer schematischen Darstellung einen Signalflussgraphen für ein Verfahren zum Betreiben einer Virtual-Reality-Brille in einem Fahrzeug unter Berücksichtigung eines lateralen Versatzes; und
- Fig. 3: in schematischer Darstellung einen Signalflussgraphen für ein Verfahren zum Betreiben einer Virtual-Reality-Brille in einem Fahrzeug unter Berücksichtigung einer bestimmten Bewegungstrajektorie.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

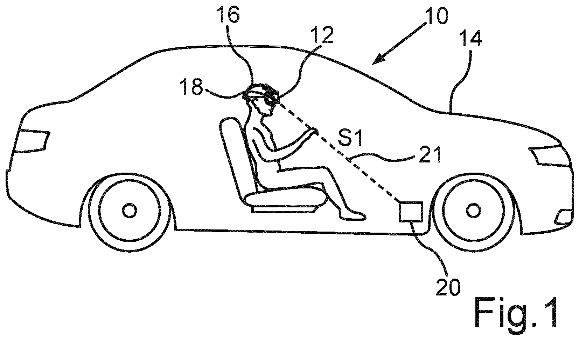

In Fig. 1 ist ein Virtual-Reality (VR)-System 10 skizziert. Das VR-System 10 umfasst eine VR-Brille 12 sowie ein Fahrzeug 14, bei dem es sich um ein Kraftfahrzeug handelt. In dem Fahrzeug 14 befindet sich ein Träger 16 der VR-Brille 12. Die VR-Brille 12 umfasst eine Steuereinrichtung 18, mithilfe derer die VR-Brille 12 angesteuert wird. Das Fahrzeug 14 umfasst eine Erfassungseinrichtung 20, die eine Fahrzeugbewegung des Fahrzeugs 14 beschreibende Bewegungsdaten erfasst. Die erfassten Bewegungsdaten werden von der Erfassungseinrichtung 20 an die Steuereinrichtung 18 der VR-Brille 12 übermittelt. In einem ersten Verfahrensschritt S1 erfolgt ein Empfangen der mittels der Erfassungseinrichtung 20 des Fahrzeugs 14 erfassten, die Fahrzeugbewegung des Fahrzeugs 14 beschreibenden Bewegungsdaten mittels der Steuereinrichtung 18 der VR-Brille 12. Die Erfassungseinrichtung 20 erfasst als Bewegungsdaten eine aktuelle Beschleunigung, eine aktuelle Geschwindigkeit, einen aktuellen Lenkwinkel und/oder eine aktuelle Höhenveränderung des Fahrzeugs 14, beispielsweise aufgrund einer Fahrt auf einer holprigen Straße.

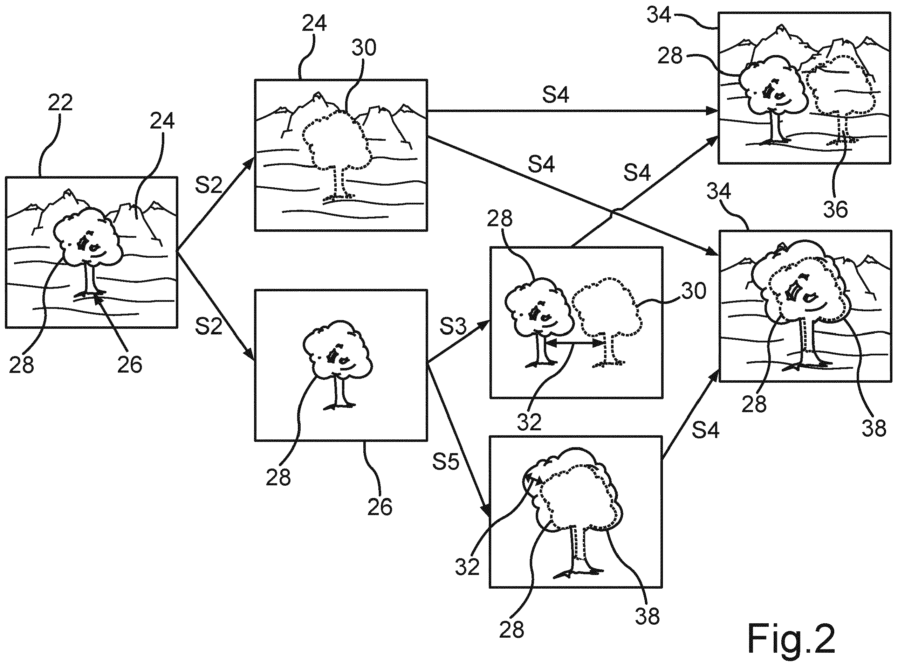

In Fig. 2 ist eine virtuelle Umgebung 22 skizziert, die mittels der VR-Brille 12 angezeigt wird. Die virtuelle Umgebung 22 ist hierbei anhand von vorgegebenen Bilddaten in der Steuereinrichtung 18 hinterlegt. Die virtuelle Umgebung 22 zeigt eine Landschaft, in deren Hintergrund 24 ein Gebirgszug zu sehen ist, wohingegen in einem Vordergrund 26 der virtuellen Umgebung 22 als ein dort positioniertes Objekt 28 ein Baum 28 zu sehen ist. In einem nächsten Schritt S2 erfolgt ein Aufteilen der die virtuelle Umgebung 22 beschreibenden Bilddaten in einen Hintergrundbilddatensatz, der den Hintergrund 24 der virtuellen Umgebung 22 charakterisiert, und zumindest einen Vordergrundbilddatensatz, der zumindest den einen im Vordergrund 26 der virtuellen Umgebung 22 positionierten Baum 28 charakterisiert. Dieses Aufteilen erfolgt unter Anwendung eines Bildverarbeitungskriteriums auf die die virtuelle Umgebung 22 beschreibenden Bilddaten. Hierbei werden also beispielsweise klassische Methoden der digitalen Bildverarbeitung verwendet, sodass beispielsweise anhand einer Anwendung eines Kantenfilters und/oder eines Schärfekriteriums der Baum 28 als Objekt 28 im Vordergrund 26 vom Hintergrund 24 unterschieden werden kann. Im Hintergrund 24 ist nun eine Bildlücke 30, da der nun nur vom Vordergrundbilddatensatz beschriebene Baum 28 aus dem Hintergrundbilddatensatz ausgeschnitten ist.

In einem nächsten Schritt S3 erfolgt ein Auswerten der erfassten Bewegungsdaten des Fahrzeugs 14 zum Bestimmen eines lateralen Versatzes 32 zwischen dem im Vordergrund 26 der virtuellen Umgebung 22 positionierten Baums 28 und dem Hintergrund 24. In Fig. 2 ist der laterale Versatz 32 in Form eines Pfeiles dargestellt. Mit gestrichelten Linien ist zudem die ursprüngliche Position des Baumes, an deren Stelle im Hintergrundbilddatensatz die Bildlücke 30 ist, skizziert.

Es werden daraufhin in einem Schritt S4 bearbeitete Bilddaten ermittelt, die eine bearbeitete virtuelle Umgebung 34 beschreiben, in der der Baum 28 im Vordergrund 26 relativ zum Hintergrund 24 gemäß dem bestimmten lateralen Versatz 32 verschoben ist. Daraufhin wird in einem weiteren hier nicht skizzierten Schritt die von den bearbeiteten Bilddaten beschriebene virtuelle Umgebung 34 auf der VR-Brille 12 für den Träger 16 angezeigt.

Mithilfe des lateralen Versatzes 32 wird erreicht, dass aufgrund des relativen Verschiebens des Baums 28 im Vordergrund 26 zum Hintergrund 24 der virtuellen Umgebung 22 für den Träger 16 der VR-Brille 12 ein Kinetoserisiko derart reduziert wird, dass ein Wahrscheinlichkeitswert für eine Wahrscheinlichkeit einer Kinetose für den Träger 16 unter einem vorgegebenen Minimalwahrscheinlichkeitswert liegt. So wird das Risiko für das Erkranken an der Reisekrankheit, der sogenannten Kinetose, für den Träger 16 der VR-Brille 12 trotz einer Bewegung des Fahrzeugs 14 gemäß der Bewegungsdaten deutlich reduziert.

Falls, wie hier skizziert, die Bildlücke 30 in der bearbeiteten virtuellen Umgebung 34 aufgrund des Verschiebens des Baums 28 im Vordergrund 26 gemäß dem bestimmten lateralen Versatz 32 entsteht, wird die Bildlücke 30 unter Anwendung eines Bildlückenauffüllkriteriums auf die bearbeiteten Bilddaten mit einem virtuellen Bildfüllinhalt 36 in der bearbeiteten virtuellen Umgebung 34 geschlossen. Dieser Bildfüllinhalt 36 kann beispielsweise anhand eines Farbwerts in einer Umgebung der Bildlücke 30 künstlich erzeugt werden. Befindet sich beispielsweise um den virtuellen Baum 28 herum eine virtuelle hellgrüne Wiese, kann durch einen entsprechenden Bildfüllinhalt 36 in derselben Farbe wie diese virtuelle Wiese erreicht werden, dass die Bildlücke 30 durch den Träger 16 der VR-Brille 12 nicht mehr zu sehen ist.

Alternativ oder zusätzlich zu dem beschriebenen lateralen Versatz 32 kann zudem der Baum 28 im Vordergrund 26 mit einem vorgegebenen Vergrößerungsfaktor vergrößert werden, sodass ein vergrößerter Baum 38 im Vordergrund 26 zu sehen ist. In der bearbeiteten virtuellen Umgebung 34 ist der vergrößerte Baum 38 relativ zum Hintergrund 24 verschoben. Dies wird hier anhand der Unterschiede zwischen dem mit gestrichelten Linien dargestellten ursprünglichen Baum 28 und dem größer dargestellten und mit durchgezogener Linie gezeichneten vergrößerten Baum 38 in der bearbeiteten virtuellen Umgebung 34 deutlich. Ein derartiger Schritt, das heißt zunächst das Vergrößern des Baums 28 um den vorgegebenen Vergrößerungsfaktor erfolgt in einem Schritt S5, woraufhin in einem Schritt analog zum Schritt S4 die virtuelle Umgebung 34 ermittelt wird.

Der laterale Versatz 32 kann hierbei nichtlinear mit dem von den Bewegungsdaten umfassten Lenkwinkel des Fahrzeugs 14 korreliert sein. Um jeweilige Bildinhalte bei starken Fahrzeugbewegungen nicht zu weit verschieben zu müssen, kann also die Verschiebung gemäß dem lateralen Versatz 32 mit einer abgeschwächten Bewegung erfolgen, die letztendlich die vom Träger 16 erfahrene Beschleunigungsänderung des Fahrzeugs 14 lediglich andeutet.

Anhand der erfassten Bewegungsdaten kann außerdem ein Rotationswinkel des Baums 28 im Vordergrund 26 relativ zum Hintergrund 24 bestimmt werden. Hierdurch kann beispielsweise eine Rechtskurvenfahrt des Fahrzeugs 14 besonders betont werden, indem der Baum 28 nicht nur lediglich lateral, wie hier in dem Beispiel in Blickrichtung des Trägers 16 nach links verschoben wird, sondern zudem leicht entgegen des Uhrzeigersinns gedreht wird (bei einer Drehachse parallel zur Blickrichtung). Hierbei ist eine Drehung um einen Winkel zwischen 0 Grad und 90 Grad möglich.

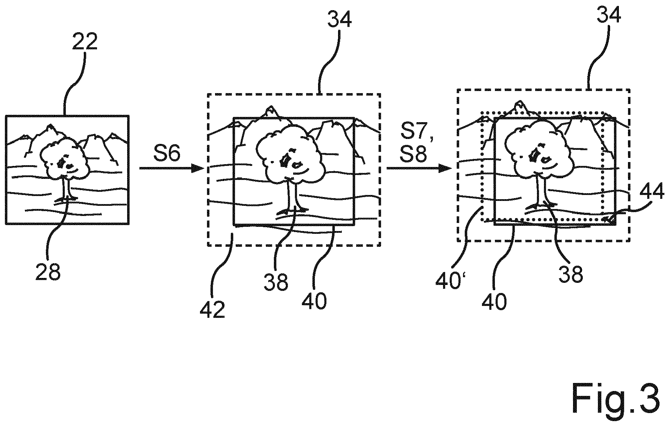

In Fig. 3 ist ein alternatives oder zusätzliches Verfahren zum Reduzieren des Kinetoserisikos für den Träger 16 der VR-Brille 12 gezeigt. Nach dem oben beschriebenen Schritt S1 erfolgt hierbei ein Vergrößern der virtuellen Umgebung 22 um einen vorgegebenen Vergrößerungsfaktor, sodass in einem Anzeigebereich 40 der VR-Brille 12 ein Randbereich 42 gebildet ist, wobei in diesem Randbereich 42 immer noch Teile der vergrößerten virtuellen Umgebung 38 liegen. Der Randbereich 42 wird jedoch nicht mehr auf der VR-Brille 12 angezeigt. Auf der VR-Brille 12 wird also lediglich der Anzeigebereich 40, dessen Grenze zum Randbereich 42 hier mit einer gestrichelten Linie skizziert ist, angezeigt. Das Vergrößern der virtuellen Umgebung 22 zur vergrößerten virtuellen Umgebung 38 erfolgt in einem Schritt S6. Der Anzeigebereich 40 umfasst einen Teilbereich eines Sichtbereichs des Trägers 16 der VR-Brille 12. Beispielsweise befindet sich der Anzeigebereich 40 mit der darauf angezeigten virtuellen Landschaft als eine Leinwand im direkten Sichtbereich des Trägers 16 der VR-Brille 12, wobei ein um den Anzeigebereich 40 herum angeordneter Sichtrandbereich schwarz und ohne dort angezeigten virtuellen Inhalt für den Träger 16 angezeigt wird. Der Sichtrandbereich befindet sich hier um den jeweils mit einer durchgezogenen Linie gezeichneten Rand des Anzeigebereichs 40 herum und überdeckt den jeweiligen von einer gestrichelten und/oder gepunkteten Linie begrenzten Inhalt, da der entsprechende Inhalt außerhalb des Anzeigebereichs 40 nicht für den Träger 16 der VR-Brille 12 angezeigt wird. Als virtuelle Umgebung eignet sich ein auf dem Anzeigebereich 40 dargestelltes Video und/oder ein dort angezeigter Comic.

In einem nächsten Schritt S7 erfolgt nun zum einen ein Auswerten der erfassten Bewegungsdaten zum Bestimmen einer Bewegungstrajektorie 44 für zumindest einen im Anzeigebereich 40 liegenden Bereich der vergrößerten virtuellen Umgebung 38. Daraufhin werden in einem Schritt S8 bearbeitete Bilddaten ermittelt, die eine bearbeitete virtuelle Umgebung 34 beschreiben, in der die vergrößerte virtuelle Umgebung 38 gemäß der Bewegungstrajektorie 44 bewegt wird. Letztendlich wird die von den bearbeiteten Bilddaten beschriebene bearbeitete virtuelle Umgebung 34 auf der VR-Brille 12 angezeigt. Der gemäß der bestimmten Bewegungstrajektorie 44 zurückgelegte Abstand und der von den Bewegungsdaten umfasste Lenkwinkel des Fahrzeugs 14 können hierbei nichtlinear miteinander korreliert sein. Die bearbeitete virtuelle Umgebung 34 erfüllt außerdem stets den ganzen Anzeigebereich 40. Der ursprüngliche angezeigte Anzeigebereich 40 ist hierbei mit einer gepunkteten Linie markiert, wohingegen die angezeigte bearbeitete virtuelle Umgebung 34 innerhalb des gestrichelten Randbereichs und somit als Anzeigebereich 40' dargestellt ist.

Zusätzlich zu den beschriebenen Bewegungsdaten, die die Fahrbewegung des Fahrzeugs 14 beschreiben, können als Bewegungsdaten zudem Brillenbewegungsdaten der VR-Brille 12 vorliegen, die mittels einer entsprechenden Sensoreinrichtung der VR-Brille 12, der Erfassungseinheit der VR-Brille, bereitgestellt werden.

Insgesamt zeigen die Beispiele eine Minderung von einem Kinetoserisiko in einem VR-System 10. Alternativ zu einer VR-Brille kann hierbei eine Mixed-Reality-Brille, das heißt ein sogenanntes MR-System, vorgesehen sein.

## Patentansprüche

1. Verfahren zum Betreiben einer Virtual-Reality-Brille (12) in einem Fahrzeug (14), wobei mittels der Virtual-Reality-Brille (12) eine von vorgegebenen Bilddaten beschriebene virtuelle Umgebung (22) angezeigt wird, umfassend folgende Schritte für eine Steuereinrichtung (18) der Virtual-Reality-Brille (12):
- Empfangen von mittels einer Erfassungseinrichtung (20) des Fahrzeugs (14) erfassten eine Fahrzeugbewegung des Fahrzeugs (14) beschreibenden Bewegungsdaten (S1);
- Aufteilen der die virtuelle Umgebung (22) beschreibenden Bilddaten in einen Hintergrundbilddatensatz, der einen Hintergrund (24) der virtuellen Umgebung (22) charakterisiert, und zumindest einen Vordergrundbilddatensatz, der zumindest ein in einem Vordergrund (26) der virtuellen Umgebung (22) positioniertes Objekt (28) charakterisiert, unter Anwendung eines Bildverarbeitungskriteriums auf die die virtuelle Umgebung (22) beschreibenden Bilddaten (S2);
- Auswerten der erfassten Bewegungsdaten zum Bestimmen eines lateralen Versatzes (32) zwischen einer Position des zumindest einen im Vordergrund (26) der virtuellen Umgebung (22) positionierten Objekts (28) und dem Hintergrund (24) (S3);
- Ermitteln von bearbeiteten Bilddaten, die eine bearbeitete virtuelle Umgebung (34) beschreiben, in der das zumindest eine Objekt (28) im Vordergrund (26) relativ zum Hintergrund (24) gemäß dem bestimmten lateralen Versatz (32) verschoben ist (S4);
- Anzeigen der von den bearbeiteten Bilddaten beschriebenen bearbeiteten virtuellen Umgebung (34) auf der Virtual-Reality-Brille (12).

2. Verfahren nach dem vorhergehenden Anspruch, wobei der bestimmte laterale Versatz (22) und ein von den Bewegungsdaten umfasster Lenkwinkel des Fahrzeugs (14) nichtlinear miteinander korreliert sind.

3. Verfahren nach einem der vorhergehenden Anspruch, wobei das zumindest eine im Vordergrund (26) der virtuellen Umgebung (22) positionierte Objekt (28) um einen vorgegebenen Vergrößerungsfaktor vergrößert wird (S5) und in der bearbeiteten virtuellen Umgebung (34) das vergrößerte zumindest eine Objekt (38) relativ zum Hintergrund (24) verschoben ist (S4).

4. Verfahren nach einem der vorhergehenden Ansprüche, wobei, falls eine Bildlücke (30) in der bearbeiteten virtuellen Umgebung (34) aufgrund des Verschiebens des zumindest einen Objekts (28) im Vordergrund (26) gemäß dem bestimmten lateralen Versatz (32) entsteht, in der bearbeiteten virtuellen Umgebung (34) die Bildlücke (30) unter Anwendung eines Bildlückenauffüllkriteriums auf die bearbeiteten Bilddaten mit einem virtuellen Bildfüllinhalt (36) geschlossen wird.

5. Verfahren nach einem der vorhergehenden Ansprüche, wobei die erfassten Bewegungsdaten zum Bestimmen eines Rotationswinkels des zumindest einen im Vordergrund (26) der virtuellen Umgebung (22) positionierten Objekts (28) relativ zum Hintergrund (24) ausgewertet und bearbeitete Bilddaten ermittelt werden, die die bearbeitete virtuelle Umgebung (34) beschreiben, in der das zumindest eine Objekt (28) im Vordergrund (26) relativ zum Hintergrund (24) gemäß dem bestimmten lateralen Versatz (32) verschoben und gemäß dem bestimmten Rotationswinkel rotiert ist.

6. Verfahren zum Betreiben einer Virtual-Reality-Brille (12) in einem Fahrzeug (14), wobei mittels der Virtual-Reality-Brille (12) eine von vorgegebenen Bilddaten beschriebene virtuelle Umgebung (22) angezeigt wird, umfassend folgende Schritte für eine Steuereinrichtung (18) der Virtual-Reality-Brille (12):
- Empfangen von mittels einer Erfassungseinrichtung (20) des Fahrzeugs (14) erfassten eine Fahrzeugbewegung des Fahrzeugs (14) beschreibenden Bewegungsdaten (S1);
- Vergrößern der virtuellen Umgebung (22) um einen vorgegebenen Vergrößerungsfaktor, sodass ein Randbereich (42) der virtuellen Umgebung (22) außerhalb eines auf der Virtual-Reality-Brille (12) angezeigten Anzeigebereichs (40) liegt (S6), wobei der Anzeigebereich (40) zumindest einen Teilbereich eines Sichtbereichs eines Trägers (16) der Virtuell-Reality-Brille (12) umfasst;
- Auswerten der erfassten Bewegungsdaten zum Bestimmen einer Bewegungstrajektorie (44) für zumindest einen im angezeigten Anzeigebereich (40) liegenden Bereich der vergrößerten virtuellen Umgebung (22) (S7);
- Ermitteln von bearbeiteten Bilddaten, die eine bearbeitete virtuelle Umgebung (34) beschreiben, in der die vergrößerte virtuelle Umgebung (38) gemäß der Bewegungstrajektorie (44) bewegt wird (S8);
- Anzeigen der von den bearbeiteten Bilddaten beschriebenen bearbeiteten virtuellen Umgebung (34) auf der Virtual-Reality-Brille (12), **dadurch gekennzeichnet, dass** ein gemäß der bestimmten Bewegungstrajektorie (44) vom im angezeigten Anzeigebereich (40) liegenden Bereich der vergrößerten virtuellen Umgebung (38) zurückgelegter Abstand und ein von den Bewegungsdaten umfasster Lenkwinkel des Fahrzeugs (14) nichtlinear miteinander korreliert sind.

7. Verfahren nach Anspruch 6, wobei beim Anzeigen der von den bearbeiteten Bilddaten beschriebenen bearbeiteten virtuellen Umgebung (34) auf der Virtual-Reality-Brille (12) die bearbeitete virtuelle Umgebung (34) stets den ganzen Anzeigebereich (40) ausfüllt.

8. Verfahren nach einem der vorhergehenden Ansprüche, wobei die Virtual-Reality-Brille (12) eine Erfassungseinheit umfasst und die Steuereinrichtung (18) mittels der Erfassungseinheit erfasste eine Bewegung der Virtual-Reality-Brille (12) beschreibende Brillenbewegungsdaten als Bewegungsdaten berücksichtigt.

9. Virtual-Reality-System (10), umfassend eine Virtual-Reality-Brille (12) und ein Fahrzeug (14), wobei das Virtual-Reality-System (10) dazu ausgebildet ist, ein Verfahren nach einem der Ansprüche 1 bis 5 und/oder ein Verfahren nach einem der Ansprüche 6 bis 8 durchzuführen.

## Claims

1. A method for operating virtual-reality goggles (12) in a vehicle (14), wherein a virtual environment (22) described by preset image data is displayed by means of the virtual-reality goggles (12), comprising the following steps for a control device (18) of the virtual-reality goggles (12):
- receiving motion data describing a vehicle motion of the vehicle (14), captured by means of a capturing device (20) of the vehicle (14) (S1);
- dividing the image data describing the virtual environment (22) into a background image dataset, which characterizes a background (24) of the virtual environment (22), and at least one foreground image dataset, which characterizes at least one object (28) positioned in a foreground (26) of the virtual environment (22), by applying an image processing criterion to the image data describing the virtual environment (22) (S2);
- evaluating the captured motion data for determining a lateral offset (32) between a position of the at least one object (28) positioned in the foreground (26) of the virtual environment (22) and the background (24) (S3);
- ascertaining processed image data, which describes a processed virtual environment (34), in which the at least one object (28) in the foreground (26) is shifted in relation to the background (24) according to the determined lateral offset (32) (S4);
- displaying the processed virtual environment (34) described by the processed image data on the virtual-reality goggles (12).

2. The method according to the preceding claim, wherein the determined lateral offset (22) and a steering angle of the vehicle (14) encompassed by the motion data are non-linearly correlated with each other.

3. The method according to any one of the preceding claims, wherein the at least one object (28) positioned in the foreground (26) of the virtual environment (22) is magnified by a preset magnification factor (S5) and the magnified at least one object (38) is shifted in relation to the background (24) in the processed virtual environment (34) (S4).

4. The method according to any one of the preceding claims, wherein if an image gap (30) arises in the processed virtual environment (34) due to the shift of the at least one object (28) in the foreground (26) according to the determined lateral offset (32), the image gap (30) is closed with a virtual image filling content (36) in the processed virtual environment (34) by applying an image gap filling criterion to the processed image data.

5. The method according to any one of the preceding claims, wherein the captured motion data is evaluated for determining a rotation angle of the at least one object (28) positioned in the foreground (26) of the virtual environment (22) in relation to the background (24), and processed image data is ascertained, which describes the processed virtual environment (34), in which the at least one object (28) in the foreground (26) is shifted in relation to the background (24) according to the determined lateral offset (32) and rotated according to the determined rotation angle.

6. A method for operating virtual-reality goggles (12) in a vehicle (14), wherein a virtual environment (22) described by preset image data is displayed by means of the virtual-reality goggles (12), comprising the following steps for a control device (18) of the virtual-reality goggles (12):
- receiving motion data describing a vehicle motion of the vehicle (14), captured by means of a capturing device (20) of the vehicle (14) (S1);
- magnifying the virtual environment (22) by a preset magnification factor, such that an edge area (42) of the virtual environment (22) is outside of a display area (40) displayed on the virtual-reality goggles (12) (S6), wherein the display area (40) includes at least a partial area of a visual range of a wearer (16) of the virtual-reality goggles (12);
- evaluating the captured motion data for determining a motion trajectory (44) for at least one area of the magnified virtual environment (22) situated in the displayed display area (40) (S7);
- ascertaining processed image data, which describes a processed virtual environment (34), in which the magnified virtual environment (38) is moved according to the motion trajectory (44) (S8);
- displaying the processed virtual environment (34) described by the processed image data on the virtual-reality goggles (12),
**characterized in that**
a distance traveled from the area of the magnified virtual environment (38) situated in the displayed display area (40) according to the determined motion trajectory (44) and a steering angle of the vehicle (14) encompassed by the motion data are non-linearly correlated with each other.

7. The method according to claim 6, wherein upon displaying the processed virtual environment (34) described by the processed image data on the virtual-reality goggles (12), the processed virtual environment (34) always fills the entire display area (40).

8. The method according to any one of the preceding claims, wherein the virtual-reality goggles (12) includes a capturing unit and the control device (18) considers goggles motion data describing a motion of the virtual-reality goggles (12), captured by means of the capturing unit, as motion data.

9. A virtual-reality system (10) including virtual-reality goggles (12) and a vehicle (14), wherein the virtual-reality system (10) is formed to perform a method according to any one of claims 1 to 5 and/or a method according to any one of claims 6 to 8.

## Revendications

1. Procédé pour faire fonctionner des lunettes de réalité virtuelle (12) dans un véhicule (14), dans lequel un environnement virtuel (22) décrit par des données d'image prédéfinies est affiché au moyen des lunettes de réalité virtuelle (12), le procédé comprenant les étapes suivantes pour un dispositif de commande (18) des lunettes de réalité virtuelle (12) :
- recevoir (S1) des données de mouvement décrivant un mouvement de véhicule du véhicule (14) acquises au moyen d'un dispositif d'acquisition (20) du véhicule (14) ;
- diviser (S2) les données d'image décrivant l'environnement virtuel (22) en un ensemble de données d'image d'arrière-plan qui caractérise un arrière-plan (24) de l'environnement virtuel (22), et au moins un ensemble de données d'image de premier plan qui caractérise au moins un objet (28) positionné au premier plan (28) de l'environnement virtuel (22), en appliquant un critère de traitement d'image aux données d'image décrivant l'environnement virtuel (22) ;
- évaluer (S3) les données de mouvement acquises pour déterminer un décalage latéral (32) entre une position du au moins un objet (28) positionné au premier plan (26) de l'environnement virtuel (22) et l'arrière-plan (24) ;
- déterminer (S4) des données d'image traitées qui décrivent un environnement virtuel traité (34), dans lequel le au moins un objet (28) est déplacé au premier plan (26) par rapport à l'arrière-plan (24) en fonction du décalage latéral (32) déterminé ;
- afficher l'environnement virtuel traité (34) décrit par les données d'image traitées sur les lunettes de réalité virtuelle (12).

2. Procédé selon la revendication précédente, dans lequel le décalage latéral déterminé (22) et un angle de braquage du véhicule (14) inclus dans les données de mouvement sont corrélés l'un avec l'autre de façon non linéaire.

3. Procédé selon l'une des revendications précédentes, dans lequel le au moins un objet (28) positionné au premier plan (26) de l'environnement virtuel (22) est agrandi (S5) d'un facteur de grossissement prédéfini et le au moins un objet (38) agrandi par rapport à l'arrière-plan (24) est déplacé (S4) dans l'environnement virtuel traité (34).

4. Procédé selon l'une des revendications précédentes, dans lequel, si un vide d'image (30) apparaît dans l'environnement virtuel traité (34) en raison du déplacement du au moins un objet (28) au premier plan (26) en fonction du décalage latéral (32) déterminé, le vide d'image (30) est comblé en appliquant un critère de remplissage de vide d'image aux données d'image traitées avec un contenu de remplissage d'image virtuel (36) dans l'environnement virtuel traité (34).

5. Procédé selon l'une des revendications précédentes, dans lequel les données de mouvement acquises sont évaluées pour déterminer un angle de rotation du au moins un objet (28) positionné au premier plan (26) de l'environnement virtuel (22) par rapport à l'arrière-plan (24) et des données d'image traitées décrivant l'environnement virtuel traité (34) sont déterminées, environnement dans lequel le au moins un objet (28) est déplacé au premier plan (26) par rapport à l'arrière-plan (24) en fonction du décalage latéral (32) déterminé et tourné en fonction de l'angle de rotation déterminé.

6. Procédé pour faire fonctionner des lunettes de réalité virtuelle (12) dans un véhicule (14), dans lequel un environnement virtuel (22) décrit par des données d'image prédéfinies est affiché au moyen des lunettes de réalité virtuelle (12), le procédé comprenant les étapes suivantes pour un dispositif de commande (18) des lunettes de réalité virtuelle (12) :
- recevoir (S1) des données de mouvement décrivant un mouvement de véhicule du véhicule (14) acquises au moyen d'un dispositif d'acquisition (20) du véhicule (14) ;
- agrandir (S6) l'environnement virtuel (22) d'un facteur de grossissement prédéfini, de telle sorte qu'une zone de bord (42) de l'environnement virtuel (22) se situe à l'extérieur d'une zone d'affichage (40) affichée sur les lunettes de lunettes de réalité virtuelle (12), la zone d'affichage (40) comprenant au moins une zone partielle d'un champ de vision d'un porteur (16) des lunettes de réalité virtuelle (12) ;
- évaluer (S7) les données de mouvement acquises pour déterminer une trajectoire de mouvement (24) pour au moins une zone située dans la zone d'affichage (40) affichée de l'environnement virtuel agrandi (22) ;
- déterminer des données d'image traitées décrivant un environnement virtuel traité (34), dans lequel l'environnement virtuel agrandi (38) est déplacé (S8) en fonction de la trajectoire de mouvement (44) ;
- afficher l'environnement virtuel traité (34) décrit par les données d'image traitées sur les lunettes de réalité virtuelle (12),
**caractérisé en ce que**
une distance parcourue par la zone située dans la zone d'affichage (40) affichée de l'environnement virtuel agrandi (38) en fonction de la trajectoire de mouvement (44) déterminée et un angle de braquage inclus dans les données de mouvement du véhicule (14) sont corrélés l'un avec l'autre de façon non linéaire.

7. Procédé selon la revendication 6, dans lequel lors de l'affichage de l'environnement virtuel traité (34) décrit par les données d'image traitées sur les lunettes de réalité virtuelle (12), l'environnement virtuel traité (34) remplit toujours la totalité de la zone d'affichage (40).

8. Procédé selon l'une des revendications précédentes, dans lequel les lunettes de réalité virtuelle (12) comprennent une unité d'acquisition et le dispositif de commande (18) considère des données de mouvement de lunettes décrivant un mouvement des lunettes de réalité virtuelle (12) et acquises au moyen de l'unité d'acquisition, comme des données de mouvement.

9. Système de réalité virtuelle (10), comprenant des lunettes de réalité virtuelle (12) et un véhicule (14), le système de réalité virtuelle (10) étant configuré pour mettre en oeuvre un procédé selon l'une des revendications 1 à 5 et/ou un procédé selon l'une des revendications 6 à 8.
